(19) Europäisches Patentamt
European Patent Office
Office européen des brevets

(11) Publication number: **0 090 014**
**B1**

(12) # EUROPEAN PATENT SPECIFICATION

(45) Date of publication of patent specification: **01.10.86**

(51) Int. Cl.[4]: **C 08 L 67/02,** C 08 L 69/00

(21) Application number: **82903111.1**

(22) Date of filing: **21.09.82**

(86) International application number:
**PCT/US82/01289**

(87) International publication number:
**WO 83/01255 14.04.83 Gazette 83/09**

(54) **BLENDS OF A POLYESTERPOLYCARBONATE COPOLYMER OR TERPOLYMER AND A POLYCARBONATE RESIN.**

(30) Priority: **30.09.81 US 307135**

(43) Date of publication of application:
**05.10.83 Bulletin 83/40**

(45) Publication of the grant of the patent:
**01.10.86 Bulletin 86/40**

(84) Designated Contracting States:
**AT BE CH DE FR GB LI NL SE**

(56) References cited:
**JP-A-55 131 048**
**JP-A-55 133 445**
**US-A-4 226 961**

(73) Proprietor: **THE DOW CHEMICAL COMPANY**
**2030 Dow Center Abbott Road P.O. Box 1967**
**Midland, MI 48640 (US)**

(72) Inventor: **BYRNE, Joseph Bernard**
**No. 1 Jeanne Court**
**Antioch, CA 94509 (US)**
Inventor: **FEAY, Darrell C.**
**67 LaCuesta**
**Orinda, CA 94563 (US)**

(74) Representative: **Casalonga, Axel et al**
**BUREAU D.A. CASALONGA OFFICE JOSSE & PETIT Morassistrasse 8**
**D-8000 München 5 (DE)**

**EP 0 090 014 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to a blend of (1) a linear copolymer that contains both carbonate and carboxylate moieties and (2) an aromatic polycarbonate resin.

Polycarbonate resins are widely employed in applications where a tough, rigid thermoplastic is required. Of particular importance are polycarbonates derived from bisphenol-A diols as are described in U.S. Patent No. 3,028,365. However, the usefulness of polycarbonates is limited by the precipitous decline in impact strength where the resin is present in greater than a certain thickness (so-called "thickness sensitivity") as well as the relatively poor low-temperature toughness and the moderate heat distortion temperature of the resin.

U.S. Patent 3,792,115 describes blends of a polycarbonate with a polyarylene ester. These blends are reported to possess improved impact strength and heat deformation resistance.

Linear copolymers containing ester and carbonate groups having improved thermal properties relative to polycarbonates have recently been introduced. U.S. Patents 4,156,069 and 4,105,633 describe polyestercarbonate copolymers containing alternating ester and carbonate groups. These alternating copolymers are disclosed to possess improved impact and thermal properties compared with a typical polycarbonate resin. European Patent Office Publication No. 50847, published May 5, 1982, describes polyestercarbonates consisting of repeating units corresponding to the formula

$$-\!\left(RO\overset{O}{\overset{\|}{C}}R'\overset{O}{\overset{\|}{C}}-O\right)_{x}RO\overset{O}{\overset{\|}{C}}O-$$

wherein R is an aromatic hydrocarbylene moiety, R′ is a meta or para phenylene group and X is a number from 0.05 to 10. This copolymer possesses good processability and low temperature toughness.

The mechanical and thermal properties of all of the aforementioned polyestercarbonate copolymers exhibit considerable variance dependent on the ratio of ester to carbonate moieties present. Heretofore, it has been necessary to tailor the copolymer composition to provide the desired balance of properties. The manufacture of the copolymers in the relatively small quantities for specific applications has significantly increased the cost of the resin relative to the projected cost of larger scale operations. It would therefore be desirable to produce an engineering plastic the properties of which can be more economically varied to meet the requirements of a variety of end uses.

The present invention is directed to a blend comprising a normally-solid polyestercarbonate copolymer or terpolymer and a normally-solid aromatic hydrocarbylene polycarbonate resin, the polyestercarbonate copolymer or terpolymer containing a plurality of repeating units corresponding to the Formula I:

$$-\!\left(RO\overset{O}{\overset{\|}{C}}R'\overset{O}{\overset{\|}{C}}-O\right)_{x}RO\overset{O}{\overset{\|}{C}}O- \qquad \text{I}$$

wherein each R is independently aromatic hydrocarbylene or inertly-substituted aromatic hydrocarbylene, each R′ is independently meta- or para-phenylene and X is a number from 0.05 to 10. The invention is characterized in that the polyestercarbonate copolymer or terpolymer comprises from 10 to 26 weight percent of the blend, the polycarbonate resin comprises from 90 to 74 weight percent of the blend, and the mole percent ester in the blend ranges from 10 to 23 based upon the sum of the number of moles of ester and carbonate groups. The blends of this invention exhibit mechanical and thermal properties very similar to a synthesized polyestercarbonate copolymer or terpolymer having the same overall ratio of ester to carbonate groups.

For the purposes of this invention, an aromatic hydrocarbylene is a divalent radical containing at least one aromatic moiety. Preferably, two aromatic moieties are present and each aromatic moiety bears one of the valences. The two aromatic moieties can be linked by

$$-O\overset{O}{\overset{\|}{C}}O-,\ -\overset{O}{\overset{\|}{S}}-,\ -\underset{\underset{O}{\|}}{\overset{O}{\overset{\|}{S}}}-,\ -\overset{O}{\overset{\|}{C}}-,\ -\overset{H}{\overset{|}{N}}-,\ -O-$$

or a chemical bond. Preferably, the aromatic moieties are joined by an alkylene or alkylidene group optionally bearing a phenyl substituent. An inertly substituted group is one having one or more substituents other than hydrogen, said substituents being inert in the blended composition and during the preparation of the composition.

Polyestercarbonate copolymers as described hereinbefore are in general compositions known in the prior art. U.S. Patents 4,260,731, 4,255,556, 4,156,069 and 4,105,633 describe a variety of

polyestercarbonate copolymers and methods for preparing them.

The group represented by "—O—R—O—" in Formula I is preferably derived from a dihydric phenol, such as, for example, 2,2-bis-(4-hydroxyphenyl)propane (i.e., bisphenol-A), bis-(4-hydroxyphenyl)methane, 1,1-bis-(4-hydroxyphenyl)ethane and phenolphthalein. Most preferably, "—O—R—O—" is derived from bisphenol A. The preferred ratio of ester to carbonate groups in the polyestercarbonate copolymer is from 1:1 to 4:1.

The polyestercarbonate component should have a molecular weight sufficiently high so that it is a solid at ambient conditions, i.e., normally solid. Generally, a weight average molecular weight (as determined by gel permeation chromatography using a bisphenol-A polycarbonate for calibration) of at least 20,000 is preferred. A copolymer having a weight average molecular weight in the range from 25,000 up to 40,000 and a polydispersity (i.e., the ratio of weight average molecular weight to number average molecular weight) of from 1.5 to 5, is especially preferred. Where a copolymer having a molecular weight less than 25,000 is employed, the physical properties of the blend may be deleteriously affected.

Particularly preferred as a component of the blend are ordered copolymers made up of repeating units corresponding to formula I wherein the molar ratio of para-phenylene to meta-phenylene in the groups represented by R' is in the range from 0.8:0.2 to 0.67:0.33. More preferably the molar ratio of para- to meta-phenylene is 0.8:0.2. The Izod impact resistance at ambient temperatures (determined in accordance with ASTM D—256) and the processability of the blend generally increases with increasing amounts of meta-phenylene in the copolymer. The heat distortion, low temperature impact resistance and fatigue resistance generally increase as the para-phenylene present in the copolymer increases, while notch sensitivity and thickness sensitivity generally decreases.

The aforementioned preferred polyestercarbonate resins are conveniently prepared by a two-step process wherein an excess of a dihydric phenol is first reacted with a mixture of isophthaloyl halide and terephthaloyl halide in the presence of a hydrogen chloride acceptor such as pyridine. The dihydroxyester intermediate produced by this reaction is then reacted with phosgene or some other agent which will form the desired carbonate linkages. The phosgene should initially be introduced rapidly to prevent formation of polyester oligomers, especially where terephthaloyl halide is the major acid chloride reactant. Both steps of the process are normally carried out under an inert atmosphere such as nitrogen at a temperature from 10° to 35°C with the reactants dissolved in one or more solvents, e.g., methylene chloride, such that the reactants are totally miscible. While the concentrations of the reactants in the solvents are not particularly critical, the concentration of dihydric hydrocarbylene is preferably from 2 to 10 weight percent and the concentration of the mixture of isophthaloyl halide and terephthaloyl halide is preferably from 1 to 5 weight percent based on the total weight of monomers and solvents. In the second step of the reaction, the concentration of ester intermediate is preferably from 3 to 15 weight percent based on total weight of ester intermediate and solvents.

The aromatic polycarbonates used in the subject blends are well-known compounds. Generally, these polycarbonates contain a plurality of structural units corresponding to the Formula II

$$\left( O-A-O-\underset{\underset{O}{\|}}{C} \right) \qquad \text{II}$$

wherein A is a divalent aromatic hydrocarbylene radical. The aromatic polycarbonate is conveniently prepared by reacting a dihydric phenol with phosgene or some other carbonate precursor in a manner known in the art. Preferably, the group "—O—A—O—" is derived from a dihydric phenol, such as, for example, bisphenol A, bis-(4-hydroxyphenyl)methane, 1,1-bis-(4-hydroxyphenyl)ethane and phenolphthalein. Most preferably, "—O—A—O—" is derived from bisphenol A.

The molecular weight of the polycarbonate should be such that the polymer is a solid at ambient conditions, but readily processable at molding temperatures. Generally, a weight average molecular weight of from 25,000 to 40,000 is preferred. At lower molecular weights the physical properties of the blend are less advantageous. The molecular weight is determined by means of gel permeation chromatography.

Other components can be incorporated into the polymer blend to improve specific properties of the blend. For example, fire retardants, plasticizers, mold release agents, thermal stabilizers and U.V. light stabilizers can all be used to advantage. Generally, these other components are used in small, but effective amounts so as to minimize deleterious effects on the properties of the blend.

The polycarbonate and polyestercarbonate can be blended by any technique which affects intimate mixing of the components without significant mechanical or thermal degradation of the polymer components. For example, the components can be dissolved or dispersed in a compatible diluent, blended together to produce a homogeneous dispersion or solution and the diluent removed.

The preferred method for blending the polymer components is in an extruder at a temperature and shear rate which will effect intimate mixing without significant polymer degradation. Generally, temperatures in the range from 250° to 370° are suitable. An extruder temperature of at least 285°C is preferred when component polymers having high softening temperatures are employed.

Preferably the blend comprises from 79 to 84 weight percent polycarbonate resin and 21 to 16 weight

percent of the polyestercarbonate copolymer or terpolymer.

Surprisingly, the subject polyestercarbonate/polycarbonate blends exhibit toughness superior to that of any of the component polymers at temperatures below −25°C. The improved low temperature toughness is apparent in an Izod impact test performed in conformance with the method set out in ASTM D—256. The impact strength at low temperatures is generally greatest where R′ in Formula I represents predominantly paraphenylene groups.

These blends also exhibit improved Izod impact strength over a wide range of temperatures where the notch has a 5 mil (0.13 mm) radius. In certain preferred embodiments, the subject blends will exhibit Izod impact strengths greater than 10 (534), more preferably greater than 11 (587) foot-pounds per inch notch (joules per meter of notch), when specimens are tested in accordance with ASTM D—256 except that 5 mil (0.13 mm) notch radii are employed.

Generally, the greatest impact resistance at ambient temperatures is attained with a blend having an ester-to-carbonate ratio from 1:9 to 7:23, or a mole percent ester of from 10 to 23 percent. The greatest impact resistance over a temperature range from 23° to −40°C is attained with a blend comprising from 15 to 21 weight percent polyestercarbonate copolymer or terpolymer, from 85 to 79 weight percent polycarbonate resin, and from 14 to 18 mole percent ester.

These blends also exhibit increased fatigue resistance, increased environmental stress crack resistance, higher softening temperatures, better resistance to heat aging and improved hydrolytic stability relative to the polycarbonate resin present in the blend. The greatest improvement in these properties is observed where the groups represented by R′ are predominantly para-phenylene. The environmental stress crack resistance is typically greatest with a blend having an overall ester to carbonate ratio of about 1:4.

In some preferred embodiments of the subject blends the Vicat softening temperature as determined in accordance with ASTM D—1525 is at least 152°C. More preferably, the Vicat heat distortion temperature of these blends is at least 155°C, most preferably at least 160°C. Generally, the heat distortion temperature rises as the ester content in the blend is increased.

It has been observed that the polyestercarbonate/polycarbonate blends exhibit a striking similarity in properties to polyestercarbonate copolymers having the same ester-to-carbonate group ratio. The blended resin does exhibit a slightly lower heat distortion temperature than does the comparable copolymer. This observation suggests an unexpected compatability in the two components in the subject blends. The blend surprisingly evidences little if any bisphasic character.

In one embodiment, more than one polyestercarbonate or polycarbonate component can be included in the blend. Surprisingly, it has been found that this blend will possess physical properties very similar to a polyestercarbonate copolymer having the same overall ratio of ester to carbonate moieties and the same overall ratio of meta- to para-phenylene groups.

The following examples are presented to illustrate the invention. Unless otherwise indicated, all parts and percentages are by weight. Impact resistance of samples of blends was measured in accordance with ASTM D—256 and tensile properties were measured in accordance with ASTM D—638.

*Preparation of Polyestercarbonate*— Experiment A

To a 12-liter flask was charged 751.0 grams of bisphenol A, 7.938 liters of methylene chloride and 676.6 grams of pyridine. Stirring was initiated when the solution cleared and 333.93 grams of isophthaloyl chloride was added continuously to the flask at a temperature from 19° to 25°C.

The solution was stirred an additional 10 minutes and then 12.35 grams of p-tert-butylphenol was introduced. Through this stirred solution was sparged 175.7 grams of phosgene over a period of 56 minutes at a temperature of 22° to 25°C.

To the resulting solution was added 1.5 liters of 3.0 N HCl to neutralize excess pyridine. The methylene chloride solution was extracted sequentially with 1 liter of 0.5N HCl and 1 liter of water. The methylene chloride solution was passed through a column packed with about 550 milliliters of a strong acid cation exchange resin. To isolate the polymer 1 volume of the methylene chloride solution was added with rapid stirring to 5 volumes of hexane. The resulting white fibers were isolated by filtration, dried in air for 24 hours and then dried under reduced pressure for 48 hours at 120°C to yield 900.1 grams of product.

Analysis of the polymer by infrared, proton magnetic resonance and elemental analysis confirmed that it is an alternating copolymer represented by the structural formula:

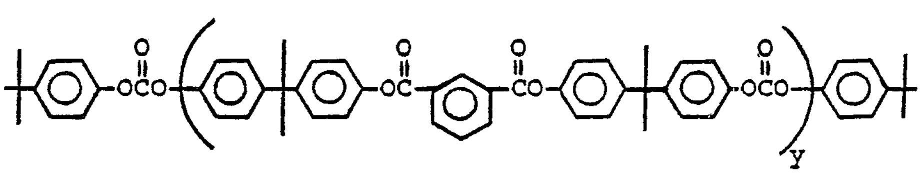

wherein y+1 is the number of carbonate groups per molecule.

Polyestercarbonate copolymers can be made in accordance with the foregoing method using terephthaloyl chloride or a mixture of isophthaloyl and terephthaloyl chlorides.

Examples 1—4 and Comparative Runs A to D

A polyestercarbonate copolymer and a polycarbonate resin were blended in a variety of ratios. The polyester carbonate copolymer (PEC) was prepared in a manner similar to Experiment A except that terephthaloyl chloride was employed as a reactant in place of isophthaloyl chloride. This PEC had an ester-to-carbonate ratio of 2:1. The polycarbonate (PC) was a bisphenol A polycarbonate sold by Mobay Chemical Company under the designation MERLON® M50F.

The PEC and PC were dry-blended at 20°C to attain the ratio of ester-to-carbonate groups tabulated in Table 1. The crude mixture was then dried at 125°C to remove water, which can deleteriously affect the physical properties of the final blend. The dried mixture was then extruded at a temperature of from 230° to 280°C. in a three-fourth inch (19 mm), two-stage, single-scew Killion extruder. The resulting strand was pelletized, dried and injection-molded at a temperature in the range from 260° to 300°C. Extrusion and molding temperatures in the higher end of the ranges specified were employed with blends containing a relatively large percentage of ester moieties.

The physical properties of the 3.2 millimeter thick injection-molded specimens were determined in accordance with standard methods. The tensile strength data and the notched Izod impact data collected for 5 mil (0.13 mm) notch radius are presented in Table I.

TABLE I

| Example or Comparative Run | Mole % Ester | Wt. % PEC | Notched Izod, 23°C 5 mil (0.13 mm) Ft. Lbs/In Notch (J/m Notch) | Tensile at Yield | | |
|---|---|---|---|---|---|---|
| | | | | Stress Psi (MPa) | Strain % | Modulus of Elasticity Psi (MPa) |
| A | 0 | 0 | 2.9 (155) | 8300 (57.2) | 6.5 | 293,000 (2020) |
| B | 3.3 | 4.1 | 2.1 (112) | 8450 (58.3) | 6.4 | 283,000 (1950) |
| C | 6.7 | 8.2 | 7.3 (390) | 8430 (58.1) | 6.8 | 277,000 (1910) |
| 1 | 10.0 | 12.4 | 13.7 (731) | 8710 (60.0) | 6.7 | 287,000 (1980) |
| 2 | 13.3 | 16.7 | 12.0 (641) | 8720 (60.1) | 6.6 | 271,000 (1870) |
| 3 | 16.7 | 21.1 | 12.5 (667) | 8650 (59.6) | 7.0 | 282,000 (1940) |
| 4 | 20.0 | 25.6 | 11.2 (598) | 9780 (67.4) | 6.9 | 275,000 (1900) |
| D | 26.7 | 35.0 | 8.5 (454) | 8613 (59.4) | 6.9 | 286,000 (1970) |

The data tabulated in Table I demonstrate that the PEC blends of this invention exhibit superior impact strength at ambient temperatures relative to polycarbonate itself without sacrificing tensile strength. The improvement is particularly clear with those blends having ratios of ester-to-carbonate groups in the range from 1:9 to 1:4, or a mole percent ester of from 10 to 20 percent.

Specimens of the extruded blends tested in Examples 1, 2 and 3 and Comparative Runs A and D were immersed in water at 100°C. At regular intervals some of the specimens were removed for testing. The Izod impact strength of these specimens was tested at 23°C in accordance with ASTM D—256 at a 10 mil (0.25 mm) radius. The impact strength of those samples which had lost integrity was not determined. The results of these tests are tabulated in Table II.

TABLE II

| Example or Comparative Run | Mole % Ester | Notched Izod Impact Strength After Indicated Hours, Ft. lbs. per in of Notch (J per m of Notch) | | | | |
|---|---|---|---|---|---|---|
| | | 0 hrs. | 6 hrs. | 24 hrs. | 48 hrs. | 72 hrs. |
| A | 0 | 19.0 (1010) | 18.6 (993) | 2.6 (139) | | |
| 1 | 10 | 14.9 (795) | 17.0 (907) | 17.1 (913) | 13.2 (705) | 2.2 (117) |
| 2 | 13.3 | 15.0 (801) | 14.4 (769) | 8.8 (470) | | |
| 3 | 16.7 | 13.4 (715) | 13.8 (737) | 12.7 (678) | 11.1 (593) | 7.0 (374) |
| D | 26.7 | 10.5 (560) | 8.7 (464) | 3.8 (203) | | |

It is noteworthy that after immersion in water for 24 hours all the blends of this invention exhibit impact strength significantly greater than the polycarbonate.

Examples 5—9

Two polyestercarbonates were prepared in the manner of Experiment A. One of these polyestercarbonates was prepared from isophthaloyl chloride (I) and the other from terephthaloyl chloride (T). A mixture of a total of 4 parts of the two polyestercarbonates are blended with 16 parts of a polycarbonate of bisphenol A in an extruder at 250°C in a manner similar to Examples 1—4. The ratio of the two polyestercarbonates in the blend (T:I) is tabulated in Table III. In each instance the PEC contains ester and carbonate groups in a ratio of 2:1. Various properties of these blends are reported in Table III. The ester-to-carbonate ratio of each blend is 3:16, or a mole percent ester of 15.8.

TABLE III

| | | | Tensile at Yield | | |
|---|---|---|---|---|---|
| Example | T:I | Notched Izod, 23°C 5 mil (0.13 mm) Ft. Lbs/In Notch (J/m Notch) | Stress Psi (MPa) | Strain % | Modulus of Elasticity Psi (MPa) |
| 5 | 0:4 | 2.4 (128) | 8722 (60.1) | 6.4 | 292,000 (2010) |
| 6 | 1:3 | 2.2 (117) | 8581 (59.2) | 6.6 | 284,000 (1960) |
| 7 | 2:2 | 4.9 (262) | 8489 (58.5) | 6.9 | 274,000 (1890) |
| 8 | 3:1 | 13.7 (731) | 8529 (58.8) | 6.8 | 279,000 (1920) |
| 9 | 4:0 | 8.9 (475) | 8652 (59.7) | 6.5 | 304,000 (2100) |

Examples 10—14 and Comparative Runs A and E through K

A polyestercarbonate terpolymer and a polycarbonate resin were blended in a variety of ratios as described earlier in Examples 1—4 and Comparative Runs A—D. The polyestercarbonate terpolymer was prepared in a manner similar to Experiment A except that the acid chloride was a mixture of 80 mole percent terephthaloyl chloride and 20 mole percent isophthaloyl chloride. This mixture gave the polyestercarbonate terpolymer a molar ratio of terephthaloyl chloride to isophthaloyl chloride (T:I) of 4:1. The inherent viscosity of the copolymer was 56 $cm^3/g$ (0.56 dl/g). The polycarbonate resin was a bisphenol A polycarbonate sold by Mobay Chemical Company under the designation of MERLON® M50F. The resin had an inherent viscosity of 53 $cm^3/g$ (0.53 dl/g).

The composition and physical properties of injection molded specimens are shown in Table IV. Examples 10—14 show a noticeable improvement in impact strength relative to the polycarbonate resin itself. There is also an improvement in impact strength due to the T/I ratio relative to the blends of Examples 1—4.

TABLE IV

| Example or Comparative Run | Mole % Ester | Wt. % PEC | Notched Izod, 23°C 5 Mil (0.13 mm) Ft. Lbs/In Notch (J/m Notch) | Tensile at Yield | | |
|---|---|---|---|---|---|---|
| | | | | Stress Psi(MPa) | Strain % | Modulus of Elasticity Psi (MPa) |
| A | 0 | 0 | 2.9 (155) | 8300 (57.2) | 6.5 | 293,000 (2020) |
| E | 3 | 3 | 2.2 (117) | 8640 (59.6) | 6.1 | 258,000 (1780) |
| F | 6 | 6 | 4.0 (214) | 8580 (59.2) | 6.0 | 303,000 (2090) |
| G | 9 | 9 | 8.8 (470) | 8530 (58.8) | 6.5 | 282,000 (1940) |
| 10 | 14 | 15 | 15.3 (817) | 8700 (60.0) | 6.6 | 301, 000 (2080) |
| 11 | 15 | 16 | 15.0 (801) | 8570 (59.1) | 6.0 | 311,000 (2140) |
| 12 | 18 | 20 | 14.1 (753) | 8720 (60.1) | 6.4 | 300,000 (2070) |
| 13 | 20 | 22 | 14.5 (774) | 8620 (59.4) | 6.5 | 291,000 (2010) |
| 14 | 22 | 25 | 12.3 (657) | 8850 (61.0) | 6.3 | 309,000 (2130) |
| H | 42 | 50 | 9.3 (496) | 8960 (61.8) | 6.9 | 296,000 (2040) |
| I | 50 | 60 | 8.7 (464) | 8870 (61.2) | 6.9 | 278,000 (1920) |
| J | 60 | 75 | 6.3 (336) | 9160 (63.2) | 7.4 | 296,000 (2040) |
| K | 75 | 100 | 4.2 (224) | 8980 (61.9) | 9.0 | 303,000 (2090) |

**Claims**

1. A blend comprising a polyestercarbonate copolymer or terpolymer solid at ambient conditions and an aromatic hydrocarbylene or inertly-substituted aromatic hydrocarbylene polycarbonate resin, solid at ambient conditions, inertly substituted being defined as having one or more substituents being inert in the blended composition and during the preparation of the composition, the polyestercarbonate copolymer or terpolymer containing a plurality of repeating units corresponding to the formula

$$-\!\!\left(RO\overset{O}{\overset{\|}{C}}R'\overset{O}{\overset{\|}{C}}-O\right)_{x}RO\overset{O}{\overset{\|}{C}}O-$$

wherein R is independently aromatic hydrocarbylene or inertly-substituted aromatic hydrocarbylene, each R′ is independently meta- or para-phenylene and X is a number from 0.05 to 10, characterized in that the polyestercarbonate copolymer or terpolymer comprises from 10 to 26 weight percent of the blend, the polycarbonate resin comprises from 90 to 74 weight percent of the blend, and the mole percent ester in the blend ranges from 10 to 23 based upon the sum of the number of moles of ester and carbonate groups.

2. The blend of Claim 1 characterized in that the polyestercarbonate copolymer or terpolymer comprises from 15 to 21 weight percent of the blend, the polycarbonate resin comprises from 85 to 79 weight percent of the blend, and the mole percent ester in the blend range from 14 to 18.

3. The blend of Claim 1 characterized in that the molar ratio of para-phenylene groups to metaphenylene groups is from .80/.20 to .67/.33.

**Patentansprüche:**

1. Mischung, enthaltend ein unter normalen Umgebungsbedingungen festes Polyesterkarbonat-Copolymer oder -Terpolymer und ein unter normalen Umgebungsbedingungen festes aromatisches Hydrocarbylen- oder inert-substituiertes aromatisches Hydrocarbylenpolykarbonatharz, wobei inertsubstituiert so definiert ist, daß ein oder mehrere Substituenten in der gemischten Zusammensetzung und während der Herstellung der Zusammensetzung inert sind, wobei das Polyesterkarbonat-Copolymer bzw.-Terpolymer eine Mehrzahl sich wiederholender Einheiten der folgenden Formel enthält:

$$-\!\!\left(RO\overset{O}{\overset{\|}{C}}R'\overset{O}{\overset{\|}{C}}-O\right)_{x}RO\overset{O}{\overset{\|}{C}}O-$$

in der jedes R unabhängig ein aromatisches Hydrocarbylen oder inert-substituiertes aromatisches Hydrocarbylen, jedes R′ unabhängig ein meta- oder para-Phenylen, und X eine Zahl zwischen 0,05 und 10 ist, dadurch gekennzeichnet, daß das Polyestercarbonat-Copolymer bzw. -Terpolymer zwischen 10 und 26 Gew.% der Mischung enthält, das Polykarbonatharz zwischen 90 und 74 Gew.% der Mischung enthält, und die Mol-Prozent des Esters in der Mischung zwischen 10 und 23 berechnet auf die Anzsahl der Ester- und Carbonatgruppenmole betragen.

2. Die Mischung gemäß Anspruch 1, dadurch gekennzeichnet, daß das Polyestercarbonat-Copolymer bzw. -Terpolymer zwischen 15 und 21 Gew.% der Mischung, das Polycarbonatharz zwischen 85 und 79 Gew.% der Mischung enthalten und die Mol-% des Esters in der Mischung zwischen 14 und 18 betragen.

3. Die Mischung gemäß Anspruch 1, dadurch gekennzeichnet, daß das Molverhältnis der para-Phenylengruppen zu den meta-Phenylengruppen zwischen 0,80/0,20 und 0,67/0,33 liegt.

**Revendications:**

1. Mélange contenant un copolymère ou terpolymère polyesterpolycarbonate, solide dans les conditions ambiantes, et une résine polycarbonate à groupe hydrocarbyléne aromatique ou à groupe hydrocarbyléne aromatique á substitution inerte, solide dans les conditions ambiantes, la substitution inerte étant définie comme ayant un ou plusieurs substituants inertes dans la composition mélangée et pendant la préparation de la composition, le copolymère ou terpolymère polyesterpolycarbonate contenant une pluralité de motifs se répétant, correspondant à la formule

$$-\!\!\left(RO\overset{O}{\overset{\|}{C}}R'\overset{O}{\overset{\|}{C}}-O\right)_{x}RO\overset{O}{\overset{\|}{C}}O-$$

dans laquelle chaque R est, de facon indépendante, un radical hydrocarbylène aromatique ou un radical hydrocarbylène aromatique à substitution inerte, chaque Ŕ est, de facon indépendante, un radical méta- ou para-phénylène, et X est un nombre allant de 0,05 á 10, caractérisé en ce que le copolymère ou terpolymère polyesterpolycarbonate constitue de 10 á 26% èn poids du mélange, le résine polycarbonate constitue de

90 á 74% en poids du mélange, et le pourcentage en moles ester dans le mélange va de 10 á 23, par rapport à la somme du nombre de moles de groupes esters et carbonates.

2. Mélange conforme à la revendication 1, caractérisé en ce que la copolymère ou terpolymère polyesterpolycarbonate constitue de 15 á 21% en pods du mélange, la résine polycarbonate constitue de 85 á 79% en poids du mélange, et la pourcentage en moles d'ester dans la mélange va de 14 á 18.

3. Mélange conforme à la revendication 1, caractérisé en ce que le rapport molaire des groupes para-phénylènes aux groupes méta-phénylènes va de 0,80/0,20 á 0,67/0,33.